# FASCICULE DE BREVET EUROPEEN

(11) **EP 0 587 477 B1**
(45) Date de publication et mention de la délivrance du brevet: **24.07.1996**
(21) Numéro de dépôt: 93402140.3
(22) Date de dépôt: 02.09.1993
(51) Int. Cl.: B60S 1/52, B60S 1/48, B60J 10/02

(54) **Joint pour surface vitrée**
Glasscheibendichtung
Glass panel seal

(30) Priorité: 08.09.1992 FR 9210705
(43) Date de publication de la demande: 16.03.1994
(73) Titulaire: HUTCHINSON, F-75008 Paris (FR)
(72) Inventeur: Durand, Eric, F-45230 La Chapelle Sur Aveyron (FR); Marche, Thierry, F-45200 Montargis (FR)
(74) Mandataire: Orès, Bernard

(56) Documents cités:
- EP-A- 0 255 218
- DE-A- 2 210 178
- DE-U- 1 919 889
- DE-U- 9 201 119
- US-A- 4 387 853

## Description

L'invention se rapporte principalement à un joint pour surface vitrée, notamment pour pare-brise, lunette arrière de véhicule automobile et lécheur de vitre.

En conduite automobile, la sécurité dépend de la visibilité, notamment à travers le pare-brise et la lunette arrière du véhicule. Cette visibilité peut être compromise par le dépôt de salissures sur la surface vitrée, notamment par projection de boue et par choc avec des insectes. On a donc été amené à prévoir, sur les véhicules automobiles, des lave-glaces comportant des gicleurs alimentés en liquide de lavage assurant sa projection sur la surface vitrée balayée par des essuie-glaces. Les gicleurs sont habituellement disposés dans une ouverture pratiquée dans une pièce de carrosserie du véhicule, notamment sur le capot avant ou directement au niveau des essuie-glaces.

La première solution de type connu nécessite de percer la carrosserie et de prendre des précautions coûteuses pour éviter la corrosion de la carrosserie au niveau de ses ouvertures.

De plus, ce type de gicleurs forme sur la carrosserie des protubérances compromettant l'esthétique du véhicule.

Dans la seconde solution, l'on augmente inutilement la masse de l'équipage mobile des essuie-glaces.

Dans tous les cas, la connexion des gicleurs au dispositif d'alimentation en liquide de lavage est complexe et fragile, ce qui augmente le coût de fabrication et de maintenance. Les gicleurs de type connu, pour être efficaces, nécessitent des réglages fréquents de leur orientation.

C'est par conséquent un but de la présente invention d'offrir un dispositif de projection d'un liquide sur une surface, notamment un lave-vitre dont le montage et/ou la connexion à un dispositif d'alimentation en liquide sont simples.

C'est également un but de la présente invention d'offrir un lave-vitre permettant une répartition désirée et prédéterminée du liquide de lavage sur la surface vitrée.

C'est aussi un but de la présente invention d'offrir un lave-vitre pour véhicule automobile présentant une esthétique moderne.

C'est également un but de la présente invention d'offrir un lave-vitre présentant une grande stabilité dans le temps.

L'invention a principalement pour objet un joint pour surface vitrée, notamment pour pare-brise ou lunette arrière des véhicules automobiles, comportant une canalisation d'alimentation de gicleurs en liquide de lavage (Joint du type divulgué, par exemple, dans les figures 11 et 12 de EP-A-0 255 218), caractérisé en ce que le joint est un profilé ayant, en coupe transversale, dans une condition non montée, la forme générale en L, en ce que, dans la condition non montée, il comporte une gorge débouchant à la surface du profilé, en ce qu'il comporte une paroi de faible épaisseur formant charnière permettant, lors du montage, de replier en U le profilé, de manière à ce que, dans la condition montée, la gorge forme la canalisation d'alimentation de gicleurs en liquide de lavage, et en ce qu'il comporte des moyens de verrouillage du joint, dans la condition montée, replié en U.

Selon divers modes de réalisation de l'invention :
- les moyens de verrouillage du joint, dans la condition montée, replié en U, comportent un premier crochet s'encliquetant dans un second crochet.
- le joint comporte des gicleurs surmoulés.
- le joint comporte une gorge de réception d'une vitre.
- le joint comporte une lèvre susceptible d'être collée sur la face externe d'un pare-brise.
- le joint est réalisé en une seule pièce.
- le joint comporte des côtés raccordés par des moulages d'angles assurant la continuité du circuit hydraulique d'alimentation des gicleurs.

L'invention sera mieux comprise au moyen de la description ci-après et des figures annexées données comme des exemples non limitatifs et sur lesquelles :
- la figure 1 est une vue en perspective partielle d'un véhicule comportant des dispositifs lave-vitres de type connu ;
- la figure 2 est une vue en perspective partielle d'un véhicule équipé d'un dispositif selon l'invention ;
- la figure 3 est une vue en perspective d'un pare-brise équipé d'une variante de réalisation du dispositif selon la présente invention ;
- la figure 4 est une vue en coupe de l'exemple préféré de réalisation du dispositif selon la présente invention en cours de montage;
- la figure 5 est une vue en coupe du dispositif de la figure 6 une fois monté sur un pare-brise.

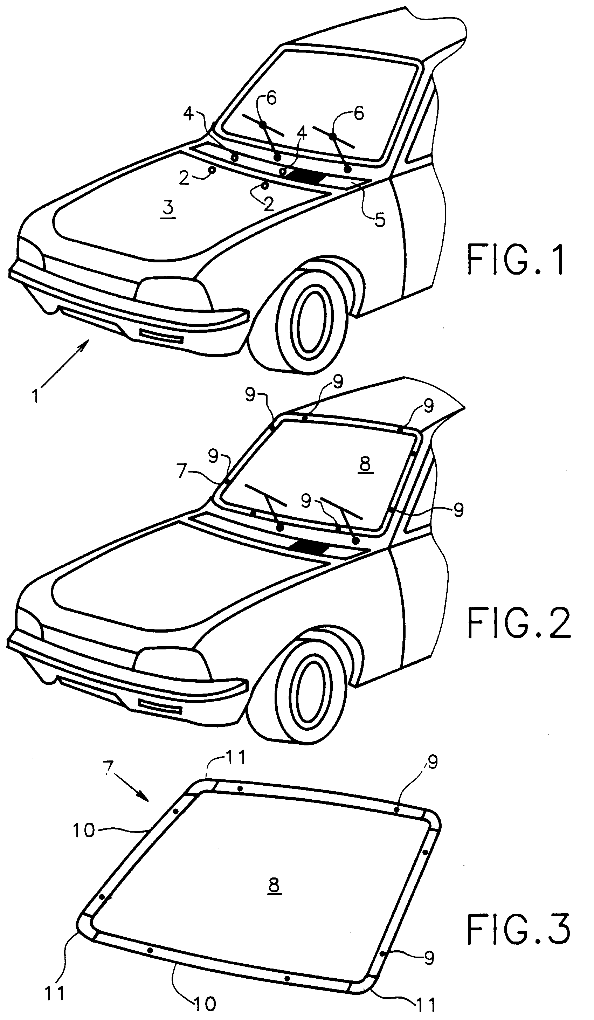

Sur les figures 2 à 5, l'on a utilisé les mêmes références pour désigner les mêmes éléments.

Sur la figure 1, l'on peut voir un véhicule sur lequel l'on a indiqué, par des cercles, les diverses positions classiques des gicleurs d'un lave-glace.

Les gicleurs 2 sont disposés dans des ouvertures pratiquées dans le capot 3 du moteur (non représenté).

Les gicleurs 4 sont disposés sur un panneau 5 de la grille d'auvent.

Les gicleurs 6 sont situés sur les essuie-glaces.

Les lave-glaces de type connu sont d'un montage complexe et la précision de la projection du liquide de lavage se dégrade avec le temps.

Sur la figure 2, l'on peut voir un véhicule automobile équipé d'un exemple de réalisation d'un dispositif lave-glace selon l'invention intégré dans un joint 7 d'un pare-brise 8. En variante, le dispositif selon l'invention peut être intégré dans l'enjoliveur du pare-brise 8, dans les lécheurs périphériques de la vitre ou les lécheurs d'essuie-glaces.

Dans l'exemple illustré, deux gicleurs 9 sont disposés sur chacun des quatre côtés du joint du pare-brise. D'une part, I'intégration des gicleurs 9 au joint assure leur position fixe et peut être rendue indéréglable par rapport au pare-brise 8. D'autre part, il est possible de répartir, plus ou moins régulièrement, un nombre important de gicleurs, ce qui augmente l'efficacité du lavage.

L'alimentation en liquide de lavage des gicleurs 9 est incorporée dans le joint 7. Le montage du dispositif de lavage sur le véhicule s'en trouve simplifié et consiste avantageusement à relier un connecteur rapide du joint 7 au circuit hydraulique d'alimentation en liquide de lavage comportant habituellement un réservoir et une pompe.

Le joint 7 peut être réalisé en une seule pièce entourant le pare-brise, comme illustré sur la figure 2, ou, au contraire, comme illustré sur la figure 3, il peut comporter quatre côtés 10 raccordés par des moulages d'angles 11 assurant la continuité du circuit hydraulique d'alimentation des gicleurs 9.

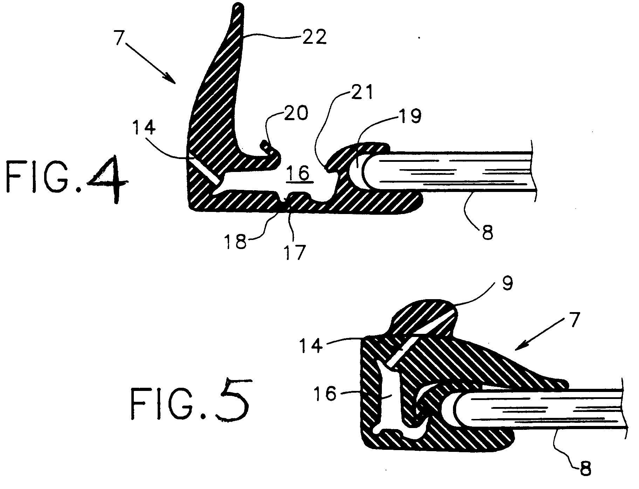

Les divers exemples de réalisation de la partie interne au joint 7 de ce circuit hydraulique sont illustrés sur les figures 4 à 7.

Sur les figures 4 et 5, l'on peut voir l'exemple de réalisation préféré d'un joint 7 selon l'invention. Le joint 7 est un profilé en L tel qu'illustré sur la figure 6 comportant un évidement 16 et des moyens de verrouillage dans une configuration repliée en U autour d'une gorge 17, laissant subsister une paroi de faible épaisseur 18 formant charnière, tel qu'illustré sur la figure 7. Dans la configuration repliée en U, l'évidement 16 forme une canalisation de distribution aux gicleurs 9, du liquide de nettoyage.

L'exemple de réalisation préféré comporte une gorge 19 enfilée sur le bord du pare-brise 8.

Des moyens de verrouillage comportent un premier crochet 20 et un second crochet 21.

Le repliement du joint 7 autour de la gorge 17 et de la charnière 18 permet un accrochage stable du crochet 20 sur le crochet 21. Avantageusement, l'on effectue le collage d'une lèvre 22 du joint 7 sur la face externe du pare-brise 8.

Dans une première variante de réalisation d'un joint 7 selon l'invention, les gicleurs 9 sont disposés en usine, lors de la réalisation du joint, au niveau des canaux 14 formés préalablement. Par exemple, l'on surmoule les gicleurs 9 sur le joint 7.

Dans une deuxième variante de réalisation d'un joint 7 selon l'invention, les gicleurs 9 sont disposés lors du montage du véhicule sur des canaux 14 formés préalablement et avantageusement marqués pour en faciliter le repérage par un opérateur humain et/ou par un robot. Par exemple, des clips équipés d'un gicleur sont sertis sur le joint 7.

Dans une troisième variante de réalisation du joint selon l'invention, les gicleurs 9 sont disposés lors du montage du véhicule avec formation simultanée des canaux 14.

Par exemple, chaque gicleur, avantageusement orientable, comporte une aiguille dont la partie effilée transperce le joint 7 pour atteindre la canalisation 16.

Le joint 7 selon l'invention peut être réalisé en divers matériaux, notamment en élastomère, en plastomère, en matériaux plastiques, en métal ou en matériaux composites.

L'invention s'applique principalement aux pare-brises, aux lunettes arrières des véhicules automobiles et/ou lécheurs de vitre, enjoliveurs de pare-brise.

L'invention s'applique également à toute surface, avantageusement vitrée, entourée par un joint, de préférence balayée par des essuie-glaces, et notamment aux pare-brises des camions, bateaux ou navires, trains, avions et hélicoptères.

## Revendications

1. Joint pour surface vitrée, notamment pour pare-brise ou lunette arrière des véhicules automobiles, comportant une canalisation (16) d'alimentation de gicleurs (9) en liquide de lavage, caractérisé en ce que le joint est un profilé ayant, en coupe transversale, dans une condition non montée, la forme générale en L, en ce que, dans la condition non montée, il comporte une gorge (16) débouchant à la surface du profilé, en ce qu'il comporte une paroi de faible épaisseur (18) formant charnière permettant, lors du montage, de replier en U le profilé, de manière à ce que, dans la condition montée, la gorge (16) forme la canalisation d'alimentation de gicleurs (9) en liquide de lavage, et en ce qu'il comporte des moyens (20, 21) de verrouillage du joint, dans la condition montée, replié en U.

2. Joint selon la revendication 1, caractérisé en ce que les moyens de verrouillage du joint, dans la condition montée, replié en U, comportent un premier crochet (20) s'encliquetant dans un second crochet (21).

3. Joint selon la revendication 1 ou 2, caractérisé en ce qu'il comporte des gicleurs (9) surmoulés.

4. Joint selon l'une quelconque des revendications précédentes, caractérisé en ce qu'il comporte une gorge (19) de réception d'une vitre (8).

5. Joint selon l'une quelconque des revendications précédentes, caractérisé en ce qu'il comporte une lèvre (22) susceptible d'être collée sur la face externe d'un pare-brise.

6. Joint selon l'une quelconque des revendications précédentes, caractérisé en ce qu'il est réalisé en une seule pièce.

7. Joint selon l'une quelconque des revendications 1 à 5, caractérisé en ce qu'il comporte des côtés (10) raccordés par des moulages d'angles (11) assurant la continuité du circuit hydraulique d'alimentation des gicleurs (9).

## Claims

1. Joint for a glazed surface, notably for a windscreen or rear window in motor vehicles, comprising a channel (16) for supplying washer jets (9) with washing liquid, characterised in that the joint is a section which, in cross-section, in an unassembled state, is generally L-shaped and, in the unassembled state, comprises a groove (16) opening onto the surface of the section, in that it comprises a thin wall (18) forming a hinge which permits U-shaped bending of the section on assembly, so that, in the assembled state, the groove (16) forms the channel for supplying the washer jets (9) with washing liquid, and in that it comprises means (20, 21) for locking the joint, bent in a U-shape, in the assembled state.

2. Joint according to claim 1, characterised in that the means for locking the joint in a U-shape in the assembled state comprise a first hook (20) which is snap fitted into a second hook (21).

3. Joint according to claim 1 or 2, characterised in that it comprises moulded-on washer jets (9).

4. Joint according to any one of the preceding claims, characterised in that it comprises a groove (19) for receiving a pane of glass (8).

5. Joint according to any one of the preceding claims, characterised in that it has a lip (22) adapted to adhere to the outer surface of a windscreen.

6. Joint according to any one of the preceding claims, characterised in that it is made in one piece.

7. Joint according to any one of claims 1 to 5, characterised in that it has sides (10) connected by angle mouldings (11) ensuring that the hydraulic supply circuit for the washer jets (9) is continuous.

## Patentansprüche

1. Scheibendichtung, insbesondere für die Windschutzscheibe oder die Heckscheibe von Kraftfahrzeugen, mit einer Zuleitung (16) für die Versorgung von Scheibenwaschdüsen (9) mit Waschflüssigkeit, dadurch gekennzeichnet, daß die Dichtung als Profil ausgebildet ist, dessen Querschnitt im nicht montierten Zustand wesentlichen L-förmig ist, daß sie im nicht montierten Zustand eine zur Oberfläche des Profils hin offene Aussparung (16) aufweist, daß sie eine als Gelenk dienende Wand (18) mit geringer Dicke aufweist, welche bei der Montage das Umbiegen des Profils in eine U-Form erlaubt, so daß die Aussparung (16) im montierten Zustand die Zuleitung für die Versorgung der Scheibenwaschdüsen (9) mit Waschflüssigkeit bildet, sowie daß sie Mittel (20, 21) zum Verriegeln der im montierten Zustand U-förmig umgebogenen Dichtung aufweist.

2. Dichtung nach Anspruch 1, dadurch gekennzeichnet, daß die Mittel zum Verriegeln der im montierten Zustand U-förmig gebogenen Dichtung einen ersten Hakenabschnitt (20) aufweisen, der an dem zweiten Hakenabschnitt (21) einrastet.

3. Dichtung nach Anspruch 1 oder 2, dadurch gekennzeichnet, daß sie daran angeformte Scheibenwaschdüsen (9) aufweist.

4. Dichtung nach einem der vorhergehenden Ansprüche, dadurch gekennzeichnet, daß sie eine Auskehlung (19) für die Aufnahme einer Glasscheibe (8) aufweist.

5. Dichtung nach einem der vorhergehenden Ansprüche, dadurch gekennzeichnet, daß sie eine Lippe (22) aufweist, welche auf die Außenfläche einer Windschutzscheibe geklebt werden kann.

6. Dichtung nach einem der vorhergehenden Ansprüche, dadurch gekennzeichnet, daß sie einstückig ausgeführt ist.

7. Dichtung nach einem der Ansprüche 1 bis 5, dadurch gekennzeichnet, daß sie Seitenteile (10) aufweist, welche zur Sicherstellung der Kontinuität der Flüssigkeitsleitung für die Versorgung der Scheibenwaschdüsen (9) mittels Winkelformstücken (11) verbunden sind.
